# EUROPÄISCHE PATENTSCHRIFT

(11) **EP 1 813 516 B1**
(45) Veröffentlichungstag und Bekanntmachung des Hinweises auf die Patenterteilung: **15.12.2010**
(21) Anmeldenummer: 07001779.3
(22) Anmeldetag: 26.01.2007
(51) Int. Cl.: B62J 9/00

(54) **Befestigungs-Adapter**
Fastening adapter
Adaptateur de fixation

(30) Priorität: 30.01.2006 DE 202006001479 U
(43) Veröffentlichungstag der Anmeldung: 01.08.2007
(73) Patentinhaber: SW-Motech GmbH & Co. KG, 35282 Rauschenberg (DE)
(72) Erfinder: Diehl, Jörg, 35282 Rauschenberg (DE); Swora, Jürgen, 35094 Lahntal (DE); Jockel, Kai, 35274 Kirchhain (DE)
(74) Vertreter: Buchhold, Jürgen

(56) Entgegenhaltungen:
- DE-U1-202004 014 057

## Beschreibung

Die Erfindung betrifft einen Adapter gemäß dem Oberbegriff von Anspruch 1, insbesondere zur lösbaren Befestigung einer Gerätschaft, eines Tankrucksacks o.dgl.

Bei Kraftfahrzeugen, insbesondere Motorrädern, besteht das mitzuführende Gerätschaften, Behälter u.dgl. in abnehmbarer Weise anzubringen. Man hat Reißverschluß-Taschen oder Kleinkoffer als Tankrucksäcke von z.B. 10 ℓ bis 20 ℓ Fassungsvermögen ausgebildet, wobei allerdings die Vielzahl unterschiedlicher Tankformen und -größen die Befestigung problematisch macht, die jedoch für die Sicherheit im Straßenverkehr sehr wichtig ist. Eine klappbare Anhängeeinrichtung gibt EP 1 076 003 B1 an. Zur Festlegung am Tank bzw, Fahrzeugrahmen benutzt man vielfach Gurte, Riemen, Verschnürungen u.dgl. Bei Blechtanks werden Magnetelemente eingesetzt, die sich nach DE 200 20 651 U1 in Tankrucksack-Bodenfächern passend unterbringen lassen. Vorgeschlagen wurde auch, einen Rucksack über dem Tank schwebend anzuordnen.

Zu besserer Befestigung dient laut DE 298 23 838 U1 ein Adapter mit einer dem Tankrucksack angepaßten Platte, deren Unterseite an dem Tank mit zum Teil umständlichen oder aufwendigen Befestigungsmitteln wie Gurten, Saugfüßen oder Magneten angebracht wird. Die Adapterplatte kann eine Ausnehmung für den Tankstutzen aufweisen, um das Betanken zu ermöglichen, ohne daß man die Platte abnehmen müßte.

In US 2004/031833 A1 ist eine Vorrichtung mit einem ringförmigen Unterteil beschrieben, das an einem Flansch eines Motorrad-Tankverschlusses angeschraubt wird, Ein ebenfalls ringförmiges Oberteil, das mit dem Boden z.B. eines Tankrucksacks fest verbunden ist, wird in den unteren Ringkörper eingeführt und daran durch Drehung fixiert, wobei einwärts gerichtete Riegelbolzen des Ringkörpers in abgewinkelte Ausnehmungen am Oberteil eingreifen und ein Schnappriegel die lösbare Verbindung sichert.

Allerdings kann der relativ enge Weg zur Tankstutzenöffnung beim Betanken hinderlich sein. Zum Einführen in das Unterteil, dessen Abmessungen durch den Tankverschluß vorgegeben sind, muß das Oberteil recht schmal sein, was für breit ausladende Gepäckstücke eventuell nachteilig ist. Bei größerem Gewicht wirkt ein beachtliches Lastmoment, das zum Einreißen des Gepäckstückbodens führen kann.

Ein demgegenüber wesentlich verbesserter, in DE-U1-20 2004 014 057 beschriebener Tankrucksack-Adapter hat zwei lösbar und sicherbar miteinander verbindbare Bauteile von Rahmen- oder Ringform, die in schwenk- und lösbarer Weise an- oder ineinanderfügbar sind, wobei ein Bauteil das andere auch über- oder untergreifen kann. Von diesen Bauteilen wird eines an einem Tankrucksack und das andere an einem Tankverschlussdeckel angebracht. Die in Rahmen- oder Ringform gestalteten Bauteile sind in einem Umfangsbereich unterbrochen und weisen miteinander fluchtende freie Rahmen- bzw. Ringenden auf. Die Bauteile haben insbesondere Hufeisengestalt, welche zur Schwenkverbindung um eine waagrechte Achse paarweise gegengleiche Abschnitte aufweisen, an dem ein Bauteil Hohl-Krallen, die Gegenstücke des anderen Bauteils teilweise umschließen. Ein am Boden des Tankrucksacks vorhandenes Oberteil verrasted fluchtend in gefügter Position mit einem formähnlich angebrachten Unterteil. Zur Sicherung der gefügten Position dienen eine Feder-Schnapprast und eine Aufnahmebohrung an oder in einem Steg gegenüber den Rahmen- bzw. Ringenden. Von Nachteil hierbei ist, dass diese Bauteile keine Möglichkeit einer Stromversorgung für mitgeführte Kleingeräte anbieten, ebensowenig die Möglichkeit beispielsweise ein Navigationssystem vibrationsgedämpft anzubringen.

Ziel der Erfindung ist es, derartige Adapter mit minimalem Aufwand weiterzuentwickeln. Die lösbare befestigte Gerätschaft bzw. ein Tankrucksack soll auf möglichst einfache Weise weitere Funktionen erhalten können, ohne die kostengünstige Herstellung, bequeme Handhabung sowie dauerhafte Zuverlässigkeit irgendwie zu beeinträchtigen.

Hauptmerkmale der Erfindung sind in Anspruch 1 angegeben. Ausgestaltungen sind Gegenstand der Ansprüche 2 bis 26. Der Oberbegriff des Anspruchs 1 stützt sich auf technischen Merkmalen aus der Offenbarung DE-U1-20 2004 014 057.

Bei einem Adapter mit zwei lösbar und sicherbar miteinander zu verbindenden Bauteilen, von denen eines an einer Gerätschaft, einem Tankrucksack o.dgl. und das andere an einem Tankverschlußdeckel anbringbar oder angebracht ist, wobei ein am Boden der Gerätschaft, des Tankrucksacks o.dgl. vorhandenes oder anbringbares Oberteil mit einem am Verschlußdeckel angebrachten Unterteil formähnlich ist und wobei die beiden Bauteile in gefügter Position miteinander fluchtend verrastbar sind, sieht die Erfindung gemäß. Anspruch 1 vor, daß in einem der Bauteile (z.B. im Unterteil) ein Magnetschalter vorhanden ist, der beim Verrasten der Bauteile eine elektrische Verbindung zu einem Stromversorger freischaltet, so daß an Anschlüssen im anderen Bauteil (z.B. im Oberteil) eine elektrische Spannung zur Verfügung steht. Diese ist für den Betrieb von Geräten, insbesondere Kleingeräten nutzbar, beispielsweise für eine Kartenleuchte, ein Ladegerät für ein Mobiltelefon o.dgl, Der erfindungsgemäße Adapter ermöglicht ein rasches und zuverlässiges Ver- und Entrasten der Gerätschaft, des Tankrucksacks u.dgl. Die Befestigung und Abnahme gehen einfach und schnell vor sich. Die stabile Verankerung des Adapters am Tankverschlußdeckel beeinträchtigt den Betankungsvorgang nicht, weil das lösbare Oberteil bequem aus einer Zapfhahnstrecke entfernt und jederzeit wieder problemlos verrastet werden kann.

Als Stromversorger ist eine Batterie vorgesehen, insbesondere die Fahrzeugbatterie. Sie führt Niederspannung von z.B. 6 V oder 12 V, wodurch die persönliche Sicherheit der Benutzer gewährleistet ist. Zuverlässiger Schutz gegen Funkenbildung ist dadurch gegeben, daß der Magnetschalter - welcher zwecks elektrischer Sicherheit und Vibrationsfestigkeit als in das eine Bauteil einfügbare oder darin angeordnete gekapselte oder harzvergossene Einheit ausgebildet ist - indirekt die elektrische Verbindung zu den Anschlüssen in dem anderen Bauteil herstellt, vorzugsweise über ein seinerseits gekapseltes oder vergossenes Relais, das zudem von den Bauteilen räumlich getrennt sein kann.

Zum Betätigen des Magnetschalters ist z.B, an oder in einem Verbindungssteg der Bauteile eine Schnapprast angeordnet, die vorzugsweise aus einem an dem einen Bauteil angebrachten Schnäpper mit einem federbelasteten Raststift und aus einer diesem gegenüber angeordneten, insbesondere waagrechten Aufnahmebohrung im anderen Bauteil besteht. Durch das Einrasten des Stifts wird der Magnetschalter betätigt, der das Relais aktiviert, so daß an den Anschlüssen die bereitgestellte Batteriespannung abgegriffen werden kann. Sie läßt sich beispielsweise für Ladevorgänge oder zum direkten Betrieb von (Klein-)Geräten nutzen, die im Tankrucksack aufbewahrt werden können. Mit einem an dem Schnäpper angreifenden Zugelement, z.B. einer Schnur, erfolgt die Entrastung bequem und schnell, auch wenn der Tankrucksack die Sicht verdeckt.

Die Bauteile können zur Verbindung um eine zur Ebene des Unterteils parallel verlaufende Schwenkachse an- oder ineinanderfügbar sein. Das Befestigen ebenso wie das Lösen geht daher mit einem Kipp- oder Schwenkvorgang einher, was die Handhabung des Adapters sehr erleichtert. Dazu können die Adapter-Bauteile so gestaltet sein, daß ein Bauteil das andere formschlüssig über- oder untergreift, was eine zuverlässige Kupplung gewährleistet. Eine schalen- oder pfannenähnliche Gelenkverbindung wird bevorzugt. Das Oberteil muß nicht unbedingt Rahmen- oder Ringform haben; es genügt, daß es Rastmittel für das Unterteil aufweist, namentlich Rasthaken. Wenn die Rahmen- bzw. Ringform in einem Umfangsbereich eines oder jedes Bauteils unterbrochen ist, ergibt sich eine offene Ring- oder Hufeisenform, wobei freie Rahmen- bzw, Ringenden - vorzugsweise mit paarweise gegengleichen Abschnitten - miteinander fluchten. Alternativ hat das Oberteil ein seine Enden verbindendes Brückenelement, das hohe Gestaltfestigkeit sichert.

Zweckmäßig sind die Rahmen- bzw. Ringenden des einen Bauteils als Krallen und diejenigen des anderen Bauteils als Krallen-Gegenstücke ausgebildet, wobei jedes Gegenstück ein positives oder Voll-Element bilden kann, das von einer Kralle als negativem oder Hohl-Element zumindest teilweise umschlossen bzw. umschließbar ist.

Die bequeme Handhabung wird unterstützt durch Anfaßrippen zumindest an den Ring- bzw. Rahmenenden des Oberteils. Dieses kann an seiner Unterseite Anschlagrippen haben, die in der gefügten Position auf oder in einer Deckfläche des Unterteils sitzen.

Konstruktiv ist eine Ausgestaltung günstig, wobei die Bauteile einen inneren Freiraum begrenzen, indem einander formähnliche Durchgangsbegrenzungen von Ober- und Unterteil einer formähnliche Durchgangsbegrenzung eines auf dem Unterteil befestigten Deckelrings zugeordnet sind. Die Befestigung des Unterteils auf dem Deckelring kann zweckmäßig mit dessen Schrauben vorgenommen werden.

Hohe Dauerfestigkeit wird dadurch gewährleistet, daß die Bauteile als insbesondere aus Kunststoff bestehende Profilkörper mit Versteifungsrippen ausgebildet sind.

In vorteilhafter Ausgestaltung ist das Oberteil an seiner Oberseite der Form und Größe einer zu halternden Gerätschaft angepaßt, z.B. einer Digital- oder Videokamera, einem Navigationsgerät o.dgl. Dabei kann das Oberteil einen Aufsatz vibrationsgedämpft haltern, so daß die Gerätschaft schwingungsisoliert mit dem Adapter verbunden bzw. verbindbar ist. Ein mit Niederspannung betreibbares Gerät kann an dem Aufsatz so angebracht sein, daß es beim Einrasten der Schnapprast sofort betriebsfähig ist.

Der Aufsatz kann ein Kupplungselement für die Gerätschaft tragen. Zweckmäßig ist dazu am Oberteil eine Scheibe, Platte o.dgl. mit seitlich abstehenden Isolierelementen befestigt, an denen der Aufsatz angebracht ist, z.B. sogenannte Schwingmetall-Klötze aus bzw. mit Gummi. Konstruktiv günstig ist es, wenn der Aufsatz schwingungsisoliert auf Armen einer mit dem Oberteil lösbar oder starr verbundenen Scheibe, Platte o.dgl. abgestützt ist, wobei diese berührungsfrei von einer Deckplatte übergriffen sein kann, die z.B. an Winkelleisten Lager für Isolierelemente trägt.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Darin zeigen:
Fig. 1 eine auseinandergezogene Schrägansicht eines Adapters,
Fig. 2a eine schematisierte Teilansicht von Rastteilen vor dem Fügen,
Fig. 2b eine schematisierte Teilansicht von Rastteilen in gefügter Position,
Fig. 3 eine Teilansicht einer Schnapprast,
Fig. 4 eine Schrägdraufsicht auf ein Adapter-Unterteil mit Kabelanschlüssen,
Fig. 5 ein elktrisches Schaltbild für die Einheit von Fig. 4,
Fig. 6 eine Druntersicht eines schwingungsgedämpften Adapters und
Fig. 7 eine Stirnansicht des Adapters von Fig. 5 mit einem Aufsatz.

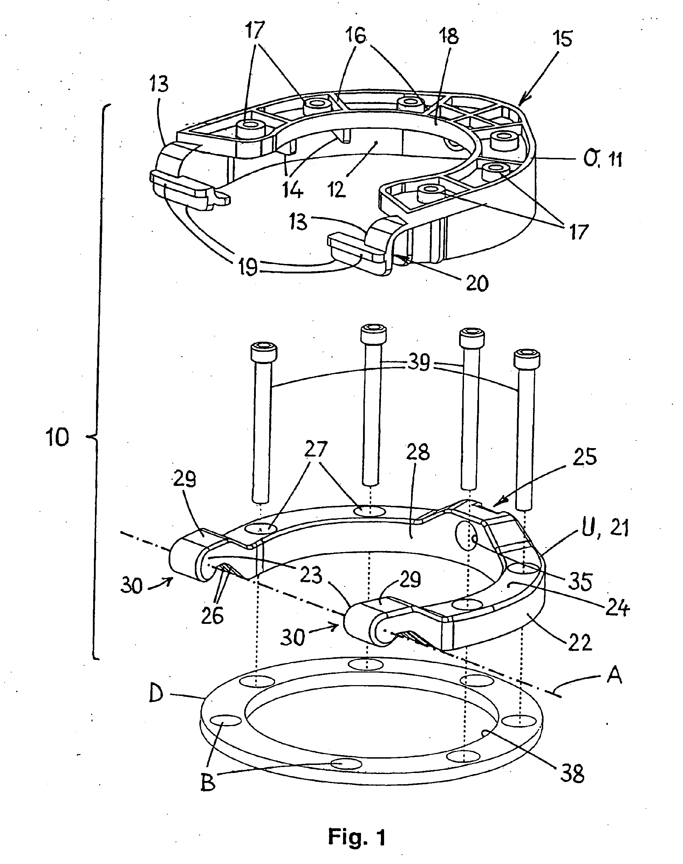

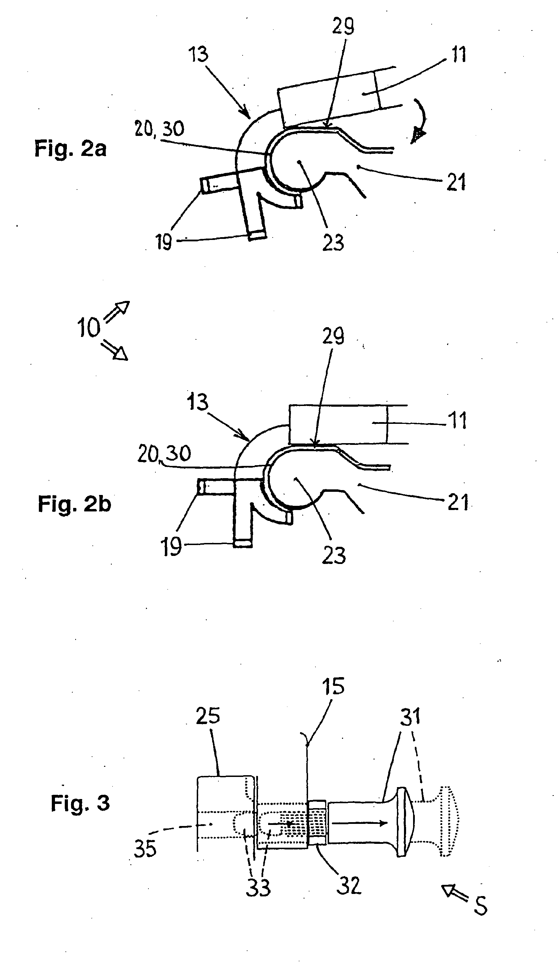

Ein insgesamt mit 10 bezeichneter Adapter besteht gemäß Fig. 1 aus zwei Bauteilen, nämlich einem Oberteil O und einem Unterteil U. Im dargestellten Beispiel sind beide Bauteile offene Ringkörper von hufeisenähnlicher Gestalt, die miteinander leicht ver- und entrastbar sind, wozu das Oberteil O freie Enden in Form von Krallen 13 und das Unterteil U freie Enden in Form von Krallengegenstücken 23 hat, die zu einem Gelenk ineinanderfügbar sind (siehe Fig. 2a und 2b).

Beide Bauteile O, U sind bevorzugt Kunststoff-Profilkörper. Das Oberteil O ist in der Mitte des Umfangsteils 11 mit einem Steg 15 versehen, und das Unterteil U hat in der Mitte seines Umfangsteils 21 einen dazu formähnlichen Steg 25. Am Oberteil O hat der Profilkörper Versteifungsrippen 16 und durchbohrte Nocken 17 in gleicher Umfangsverteilung wie Bohrungen 27 am Unterteil U. Beide Bauteile haben gleichartige Durchgangsbegrenzungen 18 bzw. 28, An einem (nicht gezeichneten) Tankverschluß z.B. eines Kraftrads befindet sich ein Deckelring D, dessen Bohrungen B mit den Unterteil-Bohrungen 27 und mit den Oberteil-Nocken 17 fluchten. Zur Befestigung des Deckelrings D am Tank durchsetzen Schrauben 39 die Bohrungen 27 des Unterteils U. Ein den Begrenzungen 18, 28 entsprechender Durchgangsbegrenzer 38 am Deckelring D erlaubt den Durchtritt des Tankverschlusses bzw. -stutzens.

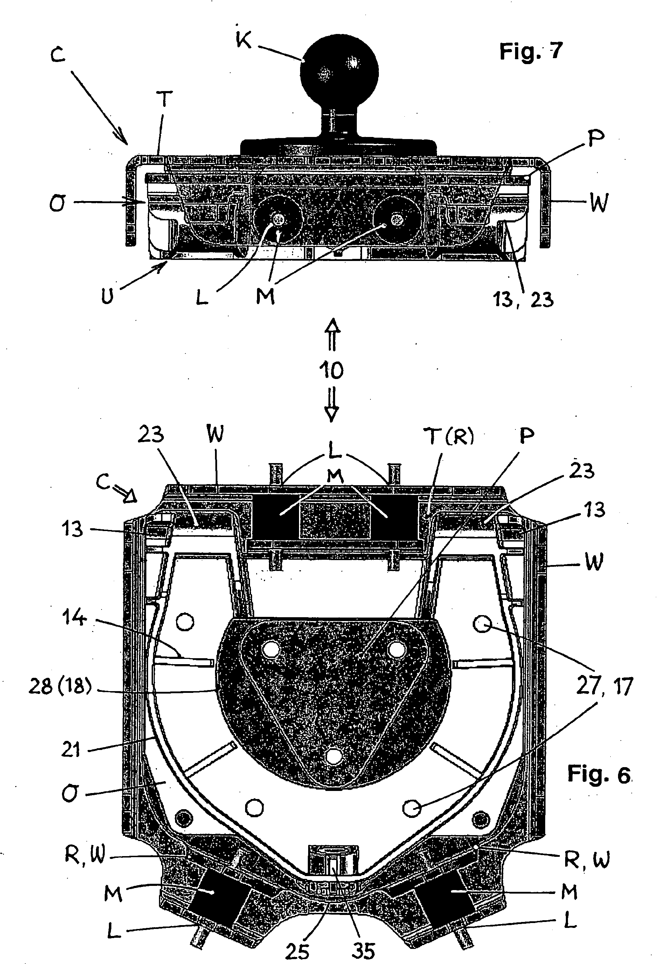

Das Oberteil O ist an einem (nicht dargestellten) Tankrucksack mit Schrauben oder Nieten befestigbar, welche die Nocken 17 durchsetzen. Alternativ ist seine Oberseite so gestaltet, daß es eine formangepaßte Halterung z.B. für eine Digital- oder Videokamera, für ein Navigationsgerät o.dgl. bildet, die bzw, das mit einem schwingungsisoliert am Oberteil O angebrachten Aufsatz A verbindbar ist, bevorzugt mittels eines daran vorhandenen Kupplungselements K (Fig. 6 und 7).

Das Kuppeln der beiden Bauteile O, U geschieht dadurch, daß die krallenförmigen Enden 13 des in leicht schräger. d.h. angewinkelter Position gehaltenen Oberteils O auf die Krallengegenstücke 23 des Unterteils U aufgelegt werden (Fig. 2a), worauf das Oberteil 0 - mit dem Tankrucksack - um die Achse A (Fig. 1) herabgeschwenkt wird und die beiden Bauteile 0, U mittels einer Schnapprast S bzw. eines Schnäppers 31 lösbar gesichert werden. Beim Herabschwenken des Oberteils O kommen Anschlagrippen 14, die an der Unterseite des Profilkörpers angeordnet sein können, zur Anlage an der Deckfläche 24 des Unterteils U. Dieser Zustand ist in Fig. 2b veranschaulicht. Zugleich legt sich die Unterseite der freien Enden 13 auf Anschlagflächen 29 der Gegenstücke 23, die innen bzw. unten durch Rippen 26 versteift sind (Fig. 1).

Die Bauteile O, U sind bevorzugt so dimensioniert, daß das Oberteil O mit seiner Innenwand 12 das Unterteil U an dessen Außenwand 22 übergreift. Um die Handhabung zu erleichtern, hat das Oberteil O an seinen freien Enden 13 Anfaßrippen 19, so daß die Auflage des Oberteils O auf dem Unterteil U mühelos vollzogen werden kann, wodurch eine (gedachte) zentrale Schwenkachse entsteht.

Man entnimmt der Fig. 3, daß der gekuppelte Zustand mittels der Schnapprast S auf einfache Weise sicherbar ist. Die Gestaltung des Schnäppers kann von der in Fig. 3 dargestellten Bauform abweichen, z.B. indem eine zum Entrasten dienende Schnur daran angebracht ist. Der Steg 25 des Unterteils U hat eine Rastbohrung 35, in die unter der Kraft einer (nicht gezeichneten) Feder ein Schnappstift 33 des Schnäppers 31 einrasten kann, der am Steg 15 des Oberteils O mittels eines Stützrings 32 festgelegt ist. Fig. 3 zeigt die eingerastete Position (links) und - gestrichelt bzw. gepunktet - die Bewegung in Pfeilrichtung zur Freigabe entgegen der Federspannung des Schnäppers 31.

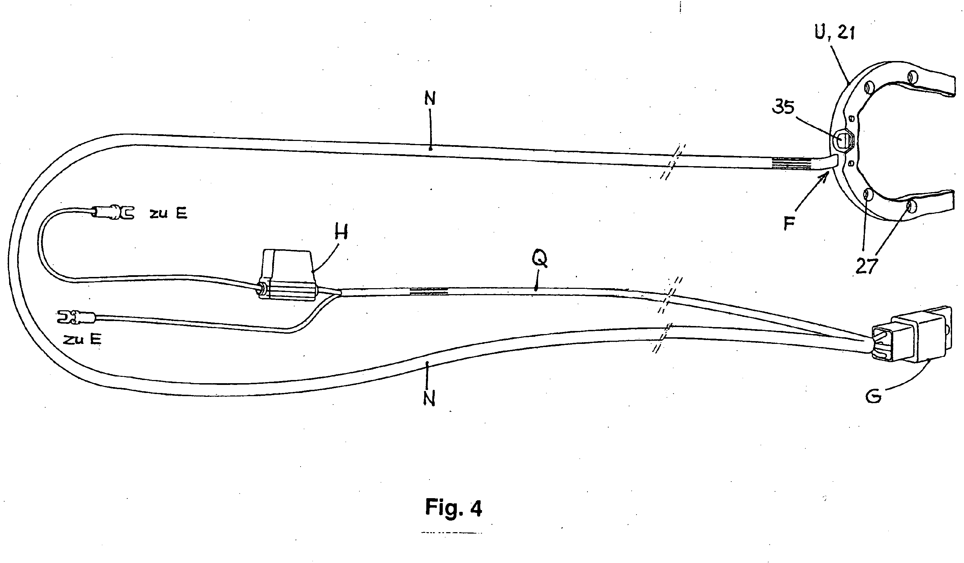

Eine bevorzugte Ausführungsform der Erfindung ist aus Fig. 4 ersichtlich. In den Profilkörper 21 des dargestellten Unterteils U ist neben der Rastbohrung 35 ein (hier nur schematisch angedeuteter) Magnetschalter F eingelassen, der durch ein vieradriges Kabel N mit einem Relais G verbunden ist. Von diesem geht ein zweiadriges Kabel Q aus, das zum Anschluß an eine (in Fig. 4 nicht gezeigte) Spannungsquelle E bestimmt ist; eine der Adern des Kabels Q weist eine gekapselte Halterung für eine austauschbare Sicherung H auf.

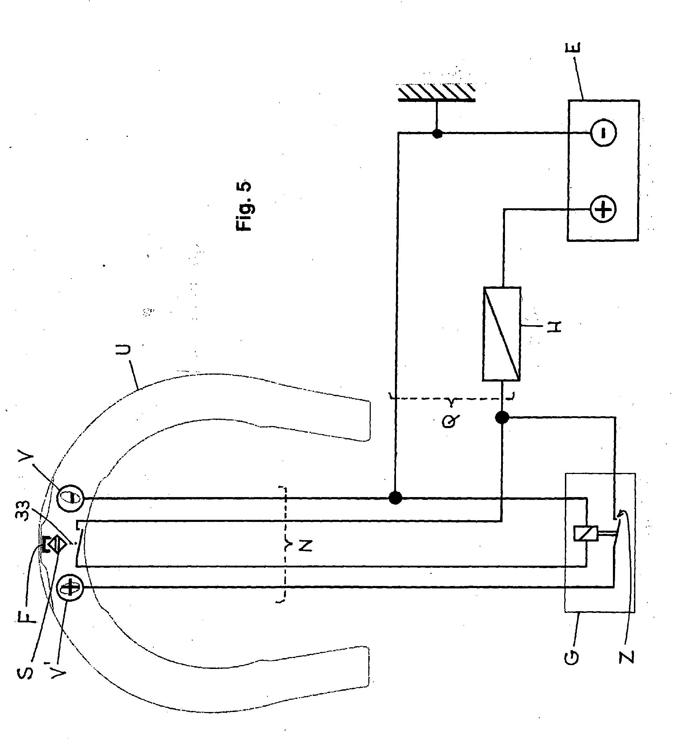

Fig. 5 stellt die elektrische Schaltungsanordnung hierzu dar. Von dem Stromversorger bzw. der Spannungsquelle E, die bevorzugt eine 6-V- oder 12-V-Fahrzeugbatterie ist, geht eine Leitung - nämlich der geerdete Minuspol - direkt zu einem Anschluß V am bzw. im Unterteil U. Der Pluspol ist über die Sicherung H an den Magnetschalter F und über das Relais G an einen zweiten Anschluß V' geführt. Beim Einrasten des Stifts 33 des Schnäppers S wird der Magnetschalter F betätigt, so daß sich der Relais-Stromkreis schließt und das Relais G anspricht, wodurch die Batteriespannung über die nun verbundenen Relaiskontakte an den zweiten Anschluß V' gelangt.

Wie aus Fig. 6 und 7 hervorgeht, kann der Adapter 10 einen Aufsatz C vibrationsgedämpft haltern, der seinerseits ein Kupplungselement K für eine Gerätschaft, einen Tankrucksack o.dgl. trägt. Dazu kann am Oberteil O eine Scheibe, Platte P o.dgl, befestigt sein, die seitlich abstehende Isolierelemente M für den Aufsatz C trägt. Sehr günstig ist es, wenn sich der Aufsatz C schwingungsisoliert auf Armen R der mit dem Oberteil O lösbar oder starr verbundenen Scheibe, Platte P o.dgl. abstützt. Die Arme R haltern bevorzugt Lager L für Isolierelemente M, die an oder in Winkelleisten W von seitlich überstehenden Teilen einer Deckplatte T gelagert sind, welche die Scheibe, Platte P o.dgl. berührungsfrei übergreift.

Die Erfindung ist nicht auf die vorbeschriebenen Ausführungs- und Anwendungsformen beschränkt, sondern in vielfältiger Weise abwandelbar, So kann das Oberteil O abweichend von Fig. 1 ein die Enden 13 einstückig verbindendes Brückenteil aufweisen, wodurch die Formfestigkeit erheblich gesteigert wird, ohne daß die Handhabung beeinträchtigt würde. Man kann den Adapter ferner zur Halterung einer Digital- oder Videokamera, eines Navigationsgeräts oder einer ähnlichen Gerätschaft benutzen, wobei das Oberteil O - analog zu Fig. 7 - oben die betreffende Gerätschaft trägt bzw. deren Form und Größe angepaßt ist, während das Unterteil U, die Befestigung am Deckelring D und die Handhabung unverändert bleiben. Das Gerät ist auch an einem schwingungsgedämpften Aufsatz mit Spannung versort bzw. versorgbar. Ferner lassen sich Gerätschaften wie z.B. ein Mobiltelefon in dem Tankrucksack aufbewahren und darin laden.

Wesentlich ist, daß der erfindungsgemäße Adapter 10 nur zwei miteinander kuppelbare, rahmen- oder ringförmige Bauteile O, U erfordert, die zur schwenkbaren Verbindung um eine insbesondere waagrechte Achse A formschlüssig und unter funkensicherer Freischaltung einer elektrischen Niederspannung miteinander stabil verrastbar sind. Bei Bedarf sind sie jedoch rasch voneinander lösbar. Man kann sie mühelos in schwenk- und lösbarer Weise an- oder ineinanderfügen sowie in gefügter Position sichern. Ein an einem Tankrucksackboden sitzendes Oberteil O ist mit einem am Tankverschlußdeckel angebrachten Unterteil U formähnlich und verrastbar. Vorzugsweise haben die Bauteile 0, U des Tankrucksack-Adapters 10 fluchtende freie Enden 13, 23 an Kunststoff-Profilkörpern 11, 21, wobei ein Bauteil das andere formschlüssig über- oder untergreifen kann. Im Fall einer Umfangsunterbrechung der Rahmen- bzw, Ringform haben die Bauteile O, U hufeisenähnliche Gestalt mit paarweise gegengleichen Abschnitten 20, 30, die an- oder ineinander passen. Das Oberteil O muß nicht ringförmig sein; es genügt, daß es Rastmittel für das Unterteil U hat, namentlich Rasthaken. Günstig ist es, wenn die freien Enden 13 des einen Bauteils (z,B. O) als Krallen negative oder Hohl-Elemente sind, welche positive oder Voll-Elemente als Krallengegenstücke 23 des anderen Bauteils (z.B. U) teilweise umschließen. Zumindest die Enden 13 des Oberteils O können Anfaßrippen 19 aufweisen. Den zusammengefügten Adapter 10 sichert eine Schnapprast S, die an oder in einem Verbindungssteg gegenüber den Enden 13, 23 angeordnet ist und aus Aufnahmebohrung 35 sowie einem federbelasteten Schnäpper 31 besteht. Dieser betätigt beim Einrasten in die Bohrung 35 z.B. mit einem Raststift 33 einen Magnetschalter F, so daß über ein Relais G eine elektrische Niederspannung an Anschlüsse V, V' gelangt, Zum Entrasten kann die Schnapprast S durch einfaches Ziehen am Schnäpper 31 entgegen der Schnäpperfeder gelöst werden, um die Bauteile O, U zu entkuppeln und den Tankrucksack mühelos abzunehmen. Das Oberteil O kann an seiner Unterseite Anschlagrippen 14 haben, die in der gefügten Position der beiden Bauteile O, U auf oder in einer Deckfläche 24 des Unterteils U sitzen. Ein z.B. auf wenigstens drei Armen R des Oberteils O schwingungsisoliert montierter Aufsatz C kann ein Kupplungselement K für eine Gerätschaft aufweisen.

Sämtliche aus den Ansprüchen, der Beschreibung und der Zeichnung hervorgehenden Merkmale und Vorteile, einschließlich konstruktiver Einzelheiten und räumlicher Anordnungen, können sowohl für sich als auch in den verschiedensten Kombinationen erfindungswesentlich sein.

### Bezugszeichenliste

- A: Schwenkachse
- B: Bohrungen
- C: Aufsatz
- D: Deckelring
- E: Stromversorger / Batterie
- F: Magnetschalter
- G: Relais
- H: Sicherung
- K: Kupplungselement
- L: Lager
- M: Isolierelemente / Schwingmetall
- N: (Vierfach-)Kabel
- O: Oberteil
- P: Platte / Scheibe
- Q: (Zweifach-)Kabel
- R: (Radial-)Arme
- S: Schnapprast
- T: Deckplatte
- U: Unterteil
- V: Anschlüsse
- W: Winkelleisten
- Z: Relaiskontakte

- 10: Adapter
- 11: (Profilkörper-) Umfangsteil
- 12: Innenwand
- 13: freie Enden / Krallen
- 14: Anschlagrippen
- 15: Steg
- 16: (Versteifungs-) Rippen
- 17: Nocken
- 18: Durchgangsbegrenzung
- 19: Anfaßrippen
- 20: Greifraum
- 21: (Profilkörper-) Umfangsteil
- 22: Außenwand
- 23: freie Enden / Krallengegenstücke
- 24: (Anschlag-) Deckfläche
- 25: Steg
- 26: (Versteifungs-) Rippen
- 27: Bohrungen
- 28: Durchgangsbegrenzung
- 29: Anschlagflächen
- 30: Lagernasen
- 31: Schnäpper
- 32: Stützring
- 33: Schnapp- / Raststift
- 35: Rastbohrung
- 38: Durchgangsbegrenzer
- 39: Schrauben
- 40:

## Patentansprüche

1. Adapter (10) mit zwei lösbar und sicherbar miteinander zu verbindenden Bauteilen (O, U), von denen eines (O) an einer Gerätschaft, einem Tankrucksack o.dgl. und das andere (U) an einem Tankverschlußdeckel (D) anbringbar oder angebracht ist, wobei ein am Boden der Gerätschaft, des Tankrucksacks o.dgl. vorhandenes oder anbringbares Oberteil (O) mit einem am Verschlußdeckel (D) angebrachten Unterteil formähnlich ist und wobei die beiden Bauteile (O, U) in gefügter Position miteinander fluchtend verrastbar sind, **dadurch gekennzeichnet, daß** in einem der Bauteile (z.B. U) ein Magnetschalter (F) vorhanden ist, der beim Verrasten der Bauteile (O, U) eine elektrische Verbindung zu einem Stromversorger (E) freischaltet, so daß an Anschlüssen (V) in dem anderen Bauteil (z.B. O) eine elektrische Spannung zur Verfügung steht.

2. Adapter nach Anspruch 1, **dadurch gekennzeichnet, daß** als Stromversorger (E) ein Akkumulator oder eine Batterie, insbesondere eine Fahrzeugbatterie mit einer Niederspannung von z.B. 6 V oder 12 V vorgesehen ist.

3. Adapter nach Anspruch 1 oder 2, **dadurch gekennzeichnet, daß** der Magnetschalter (F) als ins Unterteil (U) einsteckbare oder darin angeordnete, gekapselte oder harzvergossene Einheit ausgebildet ist.

4. Adapter nach Anspruch 3, **dadurch gekennzeichnet, daß** der Magnetschalter (F) die elektrische Verbindung zu den Anschlüssen im Oberteil (O) indirekt herstellt, nämlich über eine magnetisch gekoppelte, in räumlichem Abstand zu den Bauteilen (O, U) angeordnete Einheit (G).

5. Adapter nach Anspruch 4, **dadurch gekennzeichnet, daß** die magnetisch gekoppelte Einheit (G) ein gekapseltes oder vergossenes Relais ist.

6. Adapter nach einem der Ansprüche 1 bis 5, **dadurch gekennzeichnet, daß** zum Betätigen des Magnetschalters (F) eine Schnapprast (S) vorhanden ist, die sich z.B. an oder in einem Verbindungssteg der Bauteile (O, U) befindet.

7. Adapter nach einem der Ansprüche 1 bis 6, **dadurch gekennzeichnet, daß** zumindest an einem der Bauteile (O) mit gefederten Kugeln versehene Kontakte vorhanden sind.

8. Adapter nach Anspruch 6 oder 7, **dadurch gekennzeichnet, daß** die Schnapprast (S) einen an dem einen Bauteil (O) angebrachten, federbelasteten Schnäpper (31) mit einem Raststift (33) und eine letzterem gegenüber angeordnete, insbesondere waagrechte Aufnahmebohrung (35) aufweist.

9. Adapter nach einem der Ansprüche 1 bis 8, **dadurch gekennzeichnet, daß** beide Bauteile (O; U) in Rahmen- oder Ringform derart gestattet sind, daß ein Bauteil (z.B. O) das andere (z.B. U) formschlüssig über- oder untergreift.

10. Adapter nach Anspruch 9, **dadurch gekennzeichnet, daß** die Ring- bzw. Rahmenform wenigstens eines Bauteils (O, U) in einem Umfangsbereich unterbrochen, insbesondere zwischen den Enden (13, 23) offen ist, so daß das bzw. jedes Bauteil (O, U) offene Ring- oder Hufeisenform hat.

11. Adapter nach Anspruch 10, **dadurch gekennzeichnet, daß** das Oberteil (O) zwischen seinen Enden (13) ein diese verbindendes Brückenteil aufweist.

12. Adapter nach Anspruch 10 oder 11, **dadurch gekennzeichnet, daß** die Ring- bzw. Rahmenenden (13, 23) der Bauteile (O, U) paarweise gegengleiche Abschnitte (20, 30) aufweisen.

13. Adapter nach einem der Ansprüche 10 bis 12, **dadurch gekennzeichnet, daß** die Rahmen- bzw. Ringenden (13) des einen Bauteils (z.B. O) als Krallen und diejenigen (23) des anderen Bauteils (z.B. U) als Krallen-Gegenstücke ausgebildet sind.

14. Adapter nach Anspruch 13, **dadurch gekennzeichnet, daß** jedes Gegenstück (23) ein positives oder Voll-Element bildet, das von einer Kralle (13) als negativem oder Hohl-Element zumindest teilweise umschlossen oder umschließbar ist.

15. Adapter nach einem der Ansprüche 10 bis 14, **dadurch gekennzeichnet**, das zumindest die Rahmen- oder Ringenden (13) des Oberteils (O) Anfaßrippen (19) aufweisen.

16. Adapter nach einem der Ansprüche 1 bis 15, **dadurch gekennzeichnet, daß** das Oberteil (O) an seiner Unterseite Anschlagrippen (14) aufweist, die in der gefügten Position der Bauteile (O, U) auf oder in einer Deckfläche (24) des Unterteils (U) sitzen.

17. Adapter nach einem der Ansprüche 1 bis 16, **dadurch gekennzeichnet, daß** die Bauteile (O, U) einen inneren Freiraum begrenzen, indem einander formähnliche Durchgangsbegrenzungen (18, 28) von Ober- und Unterteil (O, U) einer formähnlichen Durchgangsbegrenzung (38) eines auf dem Unterteil (U) befestigten Deckelrings (D) zugeordnet sind.

18. Adapter nach Anspruch 17, dadurch gkennzeichnet, daß das Unterteil (U) auf dem Deckelring (D) mit dessen Schrauben (39) befestigbar ist.

19. Adapter nach einem der Ansprüche 8 bis 18, **dadurch gekennzeichnet, daß** mit dem Schnäpper (31) eine Kordel, Schnur o.dgl. verbunden ist, mit welcher der Schnäpper (31) entgegen seiner Federkraft ausrastbar ist.

20. Adapter nach einem der Ansprüche 1 bis 19, **dadurch gekennzeichnet, daß** die Bauteile (O, U) als insbesondere aus Kunststoff bestehende Profilkörper (11, 21) mit Versteifungsrippen (16, 26) ausgebildet sind.

21. Adapter nach einem der Ansprüche 1 bis 20, **dadurch gekennzeichnet, daß** das Oberteil (O) an seiner Oberseite der Form und Größe einer zu halternden Gerätschaft angepaßt ist, z.B. einer Digital- oder Videokamera, einem Navigationsgerät o.dgl.

22. Adapter nach einem der Ansprüche 1 bis 21, **dadurch gekennzeichnet, daß** das Oberteil (O) einen Aufsatz (C) vibrationsgedämpft haltert.

23. Adapter nach Anspruch 21, **dadurch gekennzeichnet, daß** der Aufsatz (C) ein Kupplungselement (K) für eine Gerätschaft, einen Tankrucksack o.dgl. trägt.

24. Adapter nach Anspruch 21 bis 23, **dadurch gekennzeichnet, daß** am Oberteil (O) eine Scheibe, Platte (P) o.dgl. befestigt ist, die seitlich abstehende Isolierelemente (M) für den Aufsatz (C) trägt.

25. Adapter nach einem der Ansprüche 22 bis 24, **dadurch gekennzeichnet, daß** der Aufsatz (C) schwingungsisoliert auf Armen (R) einer mit dem Oberteil (O) lösbar oder starr verbundenen Scheibe, Platte (P) o.dgl. abgestützt ist.

26. Adapter nach Anspruch 24 und 25, **dadurch gekennzeichnet, daß** die Scheibe, Platte (P) o.dgl. berührungsfrei von einer Deckplatte (T) übergriffen ist, die z.B. an Winkelleisten (W) Lager (L) für die Isolierelemente (M) aufweist.

## Claims

1. Adapter (10) with two detachably and securely connectable parts (O, U) one of which (O) being fixable or fixed to an equipment, a tank bag, or similar, and the other (U) to the plug neck of a tank (D), and with the upper part (O) existing at or fixable to the bottom of the equipment, the tank bag, or similar being of similar shape as the lower part fixed to the plug neck of the tank (D), and with the two parts (O, U) being in set position interlockable with each other in alignment, **characterized in that** in one of the parts (e. g. U) is a magnetic switch (F) that, with the parts (O, U) interlocking, releases an electric connection to an electric power supply (E) so that at terminals (V) in the other part (e. G. O) an electric tension is available.

2. Adapter according to Claim 1, **characterized in that** as electric power supply (E) an accumulator or a battery, in particular a car battery with a low tension of for example 6 V or 12 V is intended.

3. Adapter according to Claim 1 or 2, **characterized in that** the magnetic switch (F) is an encapsulated or resin-cast unit to be plugged in or arranged in the lower part (U).

4. Adapter according to Claim 3, **characterized in that** the magnetic switch (F) indirectly provides the electric connection to the terminals in the upper part (O), namely by a magnetically coupled unit (G) arranged in local distance to the parts (O, U).

5. Adapter according to Claim 4, **characterized in that** the magnetically couples unit (G) is an encapsulated or cast relay.

6. Adapter according to one of the Claims 1 to 5, **characterized in that** for actuating the magnetic switch (F) there is a snap catch (S) located for example on or in a bridging element of the parts (O, U).

7. Adapter according to one of the Claims 1 to 6, **characterized in that** on at least one of the parts (O) are contacts equipped with spring-mounted balls.

8. Adapter according to Claim 6 or 7, **characterized in that** the snap catch (S) has arranged on one part (O) a spring-loaded catch (31) with a plunger pin (33) and opposite the latter a particularly horizontal location hole (35).

9. Adapter according to one of the Claims 1 to 8, **characterized in that** both frame- or ring-shaped parts (O; U) are designed such that one part covers the other positively from above or from below.

10. Adapter according to Claim 9, **characterized in that** the ring- or frame-shape of at least one part (O, U) is interrupted in its peripheral region and open particularly between the ends (13, 23) so that the or each part (O, U), has the shape of an open ring or a horseshoe.

11. Adapter according to Claim 10, **characterized in that** the upper part (O) has a bridging-over element between its ends (13) that connects the same.

12. Adapter according to Claim 10 or 11, **characterized in that** the ring or frame ends (13) of one of the parts (e. g. O) have diametrically opposed sections (20, 30) in pairs.

13. Adapter according to one of the Claims 10 to 12, **characterized in that** the frame or ring ends (13) of one of the parts (e. g. O) are formed as claws and those (23) of the other part (e. g. U) are formed as counter-claws.

14. Adapter according to Claim 13, **characterized in that** each counterpart (23) is shaped as a positive or solid element that is or may at least be partially enclosed by a claw (13) as a negative of hollow element.

15. Adapter according to one of the Claims 10 to 14, **characterized in that** at least the frame or ring ends (13) of the upper part (O) have handling rips (19).

16. Adapter according to one of the Claims 1 to 15, **characterized in that** the upper part (O) features on its underside stop ribs (14) that in connected position of the parts (O, U) sit on or in a cover (24) of the lower part (U).

17. Adapter according to one of the Claims 1 to 16, **characterized in that** the parts (O, U) limit an interior free space by passage delimitations (18, 28) of similar shape in the upper part and the lower part (O, U) that are associated to an analogous passage delimitation (38) of an annular bezel (D) fixed to the lower part (U).

18. Adapter according to Claim 17, **characterized in that** the lower part (U) can be fixed on the annular bezel (D) with its screws (39).

19. Adapter according to one of the Claims 8 to 18, **characterized in that** a cord, a string, or the like is connected to the catch (31), by which the catch (31) can be disengaged against its spring resistance.

20. Adapter according to one of the Claims 1 to 19, **characterized in that** the parts (O, U) are designed as profiled bodies (11, 21) particularly in plastic, and with stiffening ribs (16,26).

21. Adapter according to one of the Claims 1 to 20, **characterized in that** the upper part (O) is on its upper side adopted to the shape and dimension of an equipment to be supported, e. g. a digital or video camera, a navigation system, or similar.

22. Adapter according to one of the Claims 1 to 21, **characterized in that** the upper part (O) supports a receptacle (C) vibration-protecting the latter.

23. Adapter according to Claim 21, **characterized in that** the receptacle (C) has a coupling element (K) for an equipment, a tank bag, or similar.

24. Adapter according to Claims 21 to 23, **characterized in that** on the upper part (O) is fixed a disk, a late (P), or similar, bearing laterally protruding insulator elements (M) for the receptacle (C).

25. Adapter according to one of the Claims 22 to 24, **characterized in that** the receptacle (C) is oscillation-insulated supported on arms ® of a disk, plate (P), or similar that is detachably or rigidly linked to the upper part (O).

26. Adapter according to Claims 24 and 25, **characterized in that** the disk, plate (P), or similar is overlapped without contact by a cover plate (T) that features for example on angular ledges (W) bearings (L) for the insulator elements (M).

## Revendications

1. Adaptateur (1) avec deux éléments (O, U) susceptibles d'être assemblés d'une manière amovible et sûre dont l'un (O) est fixable ou fixé à un appareillage, une sacoche de réservoir ou similaire, et l'autre (U) à un bouchon de réservoir (D), avec cet élément supérieur (O) existant ou fixable au fond de l'appareillage, de la sacoche de réservoir, ou similaire étant de forme identique à celle d'un élément inférieur fixé au bouchon de réservoir (D), les deux éléments (O,U) étant en position jointe enclenchables en s'alignant, **caractérisé en ce que** dans un des éléments (p. ex. U) est un commutateur magnétique qui à l'enclenchement des éléments (O, U) dégage un circuit électrique à un alimentateur en courant électrique (E) de manière qu'au terminaux (V) dans l'autre élément (p. ex. O) une tension électrique est disponible.

2. Adaptateur selon la Revendication 1, **caractérisé en ce que** comme alimentateur en courant électrique (E) un accumulateur ou une batterie, particulièrement une batterie pour auto, d'une basse tension de par exemple 6 V ou 12 V est prévu.

3. Adaptateur selon la Revendication 1 ou 2, **caractérisé en ce que** le commutateur électrique (F) est une unité encapsulée ou scellée au résine qui est fichable à ou arrangé dans l'élément inférieur (U).

4. Adaptateur selon la Revendication 3, **caractérisé en ce que** le commutateur électrique (F) établit indirectement un circuit électrique aux terminaux dans l'élément supérieur (O), à savoir par une unité (G) couplée magnétiquement et arrangée en distance locale des éléments (O,U).

5. Adaptateur selon la Revendication 4, **caractérisé en ce que** l'unité couplée magnétiquement (G) est un relais encapsulé ou scellé.

6. Adaptateur selon une des revendications 1 à 5, **caractérisé en ce que** pour actionner le commutateur électrique (F) un cliquet d'enclenchement est disponible qui se trouve par exemple sur ou dans un élément en pont des éléments (O, U).

7. Adaptateur selon une des Revendications 1 à 6, **caractérisé en ce que** au moins un des éléments (O) a des contacts avec des billes suspendues sur ressorts.

8. Adaptateur selon la Revendication 6 ou 7, **caractérisé en ce que** le cliquet d'enclenchement (S) a, monté sur un des éléments (O), un loqueteau (31) contraint par ressort et avec une tige d'enclenchement (33) et, disposé à l'opposée de ce dernier, un perçage de logement (35) notamment horizontal.

9. Adaptateur selon une des Revendications 1 à 8, **caractérisé en ce que** les deux éléments (O ; U) présentant la forme d'un cadre ou d'un anneau sont conçus de sorte qu'un élément (p. ex. O) accroche l'autre (p. ex. U) par-dessus ou par-dessous par complémentarité de forme.

10. Adaptateur selon la Revendication 9, **caractérisé en ce que** la forme d'anneau ou de cadre d'au moins un élément (O, U) est interrompue dans une zone périphérique et ouverte notamment entre les extrémités (13, 23), de sorte que l'élément ou chaque élément (O, U) ait la forme d'anneau ouvert ou d'un fer de cheval.

11. Adaptateur selon la Revendication 10, **caractérisé en ce que** l'élément supérieur (O) comporte entre les extrémités (13) un élément en pont reliant ces dernières.

12. Adaptateur selon la Revendication 10 ou 11, **caractérisé en ce que** les extrémités d'anneau ou de cadre (13, 23) des éléments (O, U) comportent des sections (20, 30) diamétralement opposées par paires.

13. Adaptateur selon une des Revendications 10 à 12, **caractérisé en ce que** les extrémités d'anneau ou de cadre (13) de l'un des éléments (p. ex. O) sont réalisées sous la forme de griffes et celles (23) de l'autre élément (p. ex. U) sont réalisées sous la forme de pendants de griffes.

14. Adaptateur selon la Revendication 13, **caractérisé en ce que** chaque pendant (23) forme un élément positif ou plein, qui est entouré ou susceptible d'être entouré au moins partiellement par une griffe (13) en tant qu'élément négatif ou creux.

15. Adaptateur selon une des Revendications 10 à 14, **caractérisé en ce qu'**au moins les extrémités de cadre ou d'anneau (13) de l'élément supérieur (O) comportent des nervures de préhension.

16. Adaptateur selon une des Revendications 1 à 15, **caractérisé en ce que** l'élément supérieur (O) comporte sur sa face inférieure des nervures de butée (14) qui dans la position jointe des éléments (O, U) sont logées sur ou dans une surface de recouvrement (24) de l'élément inférieur (U).

17. Adaptateur selon une des Revendications 1 à 16, **caractérisé en ce que** les éléments (O, U) délimitent un espace libre intérieur, **en ce que** des délimitations de transition (18, 28) de forme mutuellement analogue de l'élément supérieur et inférieur (O, U) sont associées à une délimitation de transition de forme analogue (38) d'une bague de couvercle (D) fixée sur l'élément inférieur (U).

18. Adaptateur selon la Revendication 17, **caractérisé en ce que** l'élément inférieur (U) est susceptible de se fixer sur la bague de couvercle (D), avec les vis de ce dernière.

19. Adaptateur selon une des Revendications 8 à 18, **caractérisé en ce qu'**au loqueteau (31) est relié une cordelette, une ficelle ou similaire, à l'aide de laquelle le loqueteau (31) peut se dégager à l'encontre de la tension de son ressort.

20. Adaptateur selon une des Revendications 1 à 19, **caractérisé en ce que** les éléments (O, U) sont réalisés sous la forme de corps profilés (11, 21) notamment en matière plastique, avec des nervures de renfort (16, 26).

21. Adaptateur selon une des Revendications 1 à 20, **caractérisée en ce que** l'élément supérieur (O) est adapté sur sa face supérieure à la forme et à la dimension d'un appareillage qui doit être maintenu, par exemple un appareil de photo numérique ou une caméra vidéo, un appareil de navigation ou similaire.

22. Adaptateur selon une des Revendications 1 à 20, **caractérisé en ce que** l'élément supérieur (O) reteint un talon (C) en amortissant les vibrations.

23. Adaptateur selon la Revendication 21, **caractérisé en ce que** le talon (C) porte un élément d'accouplement (K) pour un appareillage, une sacoche de réservoir ou similaire.

24. Adaptateur selon une des Revendications 21 à 23, **caractérisé en ce que** sur l'élément supérieur (O) est fixé une plaque (P) ou similaire, qui porte des éléments isolants latéralement débordants pour le talon (C).

25. Adaptateur selon une des Revendications 22 à 24, **caractérisé en ce que** le talon (C) s'appuie en étant isolé en oscillations sur des bras (R) d'un disque ou d'une plaque (P) ou similaire, relié(e) de façon amovible ou rigide avec l'élément supérieur (O).

26. Adaptateur selon les Revendications 24 et 25, **caractérisé en ce que** le disque, la plaque (P) ou similaire est chevauché€ sans contact par une plaque de recouvrement (T), qui comporte par exemple sur des baguettes en équerre (W) des paliers (L) pour les éléments isolants (M).
